# EUROPEAN PATENT SPECIFICATION

(11) **EP 4 418 524 B1**
(45) Date of publication and mention of the grant of the patent: **01.04.2026**
(21) Application number: 22914120.5
(22) Date of filing: 08.12.2022
(51) Int. Cl.: H02P 6/12, H02P 6/14, H02P 6/15, H02P 6/08, H02P 6/28, H02P 29/024, H02P 29/028, H02P 29/40, H02P 27/08

(54) **ELECTRIC TOOL**
ELEKTROWERKZEUG
OUTIL ÉLECTRIQUE

(30) Priority: 27.12.2021 CN 202111611940; 27.12.2021 CN 202111611941; 27.12.2021 CN 202111611939; 27.12.2021 CN 202111635939
(43) Date of publication of application: 21.08.2024
(73) Proprietor: Nanjing Chervon Industry Co., Ltd., Nanjing, Jiangsu 211106 (CN)
(72) Inventor: GAO, Qing, Nanjing, Jiangsu 211106 (CN)
(74) Representative: Sun, Yiming
(86) International application number: PCT/CN2022/137389
(87) International publication number: WO 2023/124865

(56) References cited:
- EP-A1- 3 584 924
- WO-A1-2019/082682
- CN-A- 108 964 531
- CN-A- 109 155 601
- CN-A- 109 713 949
- CN-A- 109 713 949
- CN-A- 111 034 011
- CN-A- 113 131 806
- CN-A- 113 131 806
- JP-A- 2007 330 011
- CHEN WEI ET AL: "A Position Sensorless Control Strategy for the BLDCM Based on a Flux-Linkage Function", IEEE TRANSACTIONS ON INDUSTRIAL ELECTRONICS, IEEE SERVICE CENTER, PISCATAWAY, NJ, USA, vol. 66, no. 4, 1 April 2019 (2019-04-01), pages 2570 - 2579, XP011703744, ISSN: 0278-0046, [retrieved on 20181203], DOI: 10.1109/TIE.2018.2842719

## Description

### TECHNICAL FIELD

The present application relates to the field of power

### BACKGROUND

The document WO 2019/082682 A1 discloses a motor drive unit used in a refrigerator, with a control amount adjustment section which adjusts the control amount of drive speed of brushless DC motor and adjusts control amount according to supply state of the DC motor. "A Position Sensorless Control Strategy for the BLDCM Based on a Flux-Linkage Function", IEEE TRANSACTIONS ON INDUSTRIAL ELECTRONICS, IEEE SERVICE CENTER, PISCATAWAY, NJ, USA, vol. 66, no. 4, 1 April 2019 (2019-04-01), pages 2570-2579 discloses a sensor less control strategy for the brushless dc motor by employing a flux-linkage functions in the high-speed and low-speed ranges with highly accurate and reliable commutation. CN 109 713 949 A discloses a brushless DC motor torque pulsation inhibiting system with Hall sensor connected with brushless DC motor, where operation of voltage-type inverter is controlled when three-phase brushless DC motor is in change state. CN 113 131 806 A discloses a device for controlling the brushless direct current motor, has microcontroller utilizing 150 degrees square wave driving mode to send driving signal to output three-phase bridge and sending another driving signal to output three-phase bridge.

To increase the rotational speed of the electric motor in the full speed segment of a non-inductive motor, the lead angle and spread angle are generally introduced in the electric motor control to increase the conduction angle of the windings and improve the field weakening of the windings, thereby increasing the rotational speed of the electric motor. That is to say, the three-phase stator windings of the electric motor no longer adopt the simple conduction and commutation in twos, but also adopt the process of conduction and commutation in threes, so as to increase the conduction angle of the electric motor windings.

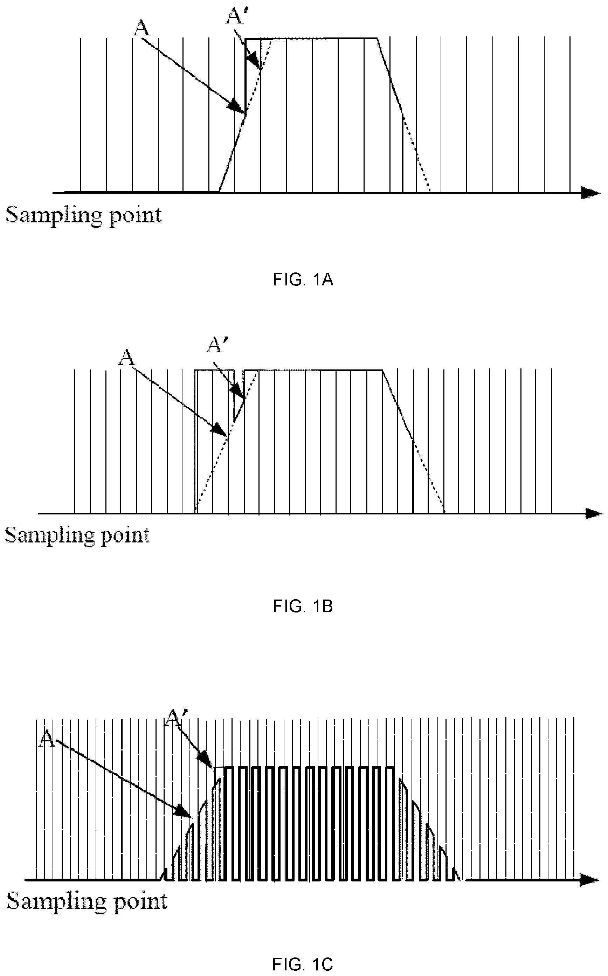

When the stator windings of the electric motor are turned on in twos, the floating phase during commutation occupies an electrical angle of 60° in one electrical cycle. Even if the commutation point detection is inaccurate, the next commutation lag does not occur. However, when the winding conduction angle is expanded to more than 120°, especially when the winding conduction angle is greater than 150°, the electrical cycle occupied by the floating phase is only 30°. If the commutation point detection is inaccurate, the next commutation lag occurs, the floating phase may be submerged during the next commutation, and the system failure occurs in severe cases. Common factors that cause inaccurate commutation point detection are described below. As shown in FIG. 1A, since the commutation speed is too fast or the program sampling interval is too large, the actual commutation point A' lags behind the ideal commutation pointA. As shown in FIG. 1B, due to a relatively large load, the freewheeling time during the commutation of the electric motor is relatively long, and the ideal commutation point A appears during the freewheeling process and cannot be detected, causing the actually detected commutation point A' to lag much behind the ideal commutation point A. As shown in FIG. 1C, due to the pulse-width modulation (PWM), the smaller the PWM duty cycle, the smaller the probability of the ideal commutation point being detected. For example, when the PWM signal is a negative pulse, the rotor position cannot be detected, and the actual ideal commutation point A cannot be accurately identified, causing the actual commutation point A' to lag much behind the ideal commutation point A. The present application aims to solve the problems of the commutation lag and system failure caused by inaccurate commutation point detection due to the preceding reasons.

### SUMMARY

To solve the deficiencies in the related art, the present application provides a power tool that can accurately detect a commutation point and adjust the conduction angle of the electric motor windings accordingly.

The present application adopts the technical solutions described below and the invention is to be found in the appended independent claims.

### BRIEF DESCRIPTION OF DRAWINGS

FIGS. 1A to 1C are schematic diagrams illustrating the cause of inaccurate commutation point detection in the existing art;
FIG. 2 is a structural view of a power tool according to an example of the present application;
FIG. 3 is a circuit block diagram of a power tool according to an example of the present application;
FIG. 4 is a schematic diagram of the periodic commutation when electric motor windings are turned on in twos according to an example of the present application;
FIG. 5 is a schematic diagram of the periodic commutation when electric motor windings are turned on in threes according to an example of the present application;
FIG. 6 is a schematic diagram illustrating that the floating phase is submerged when the electric motor windings are turned on in twos or threes for commutation according to an example of the present application;
FIG. 7 is a schematic diagram of commutation points of stating windings according to an example of the present application;
FIG. 8 is a schematic diagram of actual commutation points of stating windings according to an example of the present application;
FIG. 9 is a schematic diagram of the freewheeling time during the commutation of stating windings according to an example of the present application;
FIG. 10 is a schematic diagram illustrating the relationship between the load and the parameter range change according to an example of the present application;
FIG. 11 is a schematic diagram illustrating the cause of inaccurate commutation point detection in the related art;
FIG. 12 is a circuit block diagram of a power tool according to an example of the present application;
FIG. 13 is a schematic diagram of partial winding commutation of electric motor windings under PWM according to an example of the present application;
FIG. 14 is a schematic diagram illustrating the phase voltage change trend of the floating phase according to an example of the present application;
FIG. 15 is a schematic diagram illustrating the phase voltage change trend of the floating phase according to an example of the present application;
FIGS. 16A and FIG. 16B are schematic diagrams illustrating the freewheeling mode of a driver circuit according to an example of the present application;
FIG. 17 is a schematic diagram of the periodic commutation when electric motor windings are turned on in twos with an electrical conduction angle of less than 120° according to an example of the present application; and
FIG. 18 is a flowchart of a method for controlling a power tool according to an example of the present application.

### DETAILED DESCRIPTION

Unless otherwise defined, all technical and scientific terms used herein have the same meanings as those commonly understood by those skilled in the art to which the present application pertains. Terms used in the specification of the present application are only used for describing the examples and not intended to limit the present application. The term "and/or" used herein includes any or all combinations of at least one listed associated items.

Power tools to which the technical solutions of the present application are applicable include, but are not limited to, a sanding tool, an electric drill, an electric circular saw, a reciprocating saw, a miter saw, and any power tool that can use the brushless and sensorless electronic control manner. Other types of power tools that can use the essential content of the technical solutions disclosed below fall within the scope of the present application.

In the present application, electric motor windings, stator windings, or windings all represent metal windings in the electric motor. Unless otherwise specified, the preceding terms for the metal windings can be used universally.

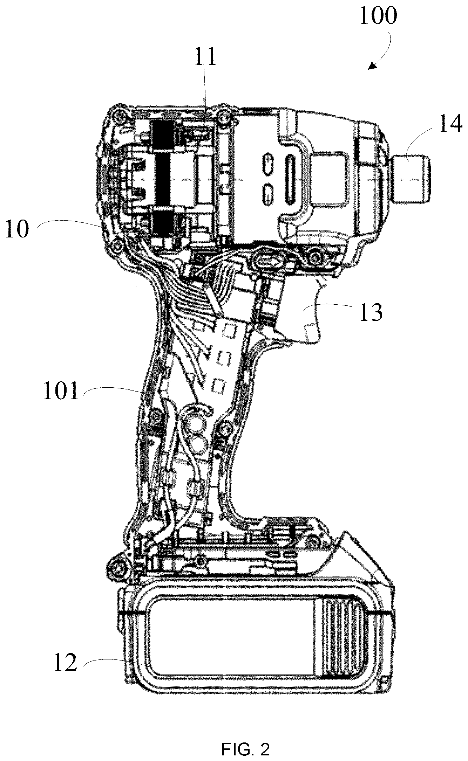

In an example of the present application, referring to FIG. 2, an impact power tool is used as an example, and a power tool 100 includes at least a housing 10, an electric motor 11 in the housing, a power supply 12, a switch 13, a working head 14, and the like. The electric motor, a control circuit board, and a transmission structure (not shown) are disposed in the housing 10. The housing 10 is further formed with a grip 101 for a user to hold.

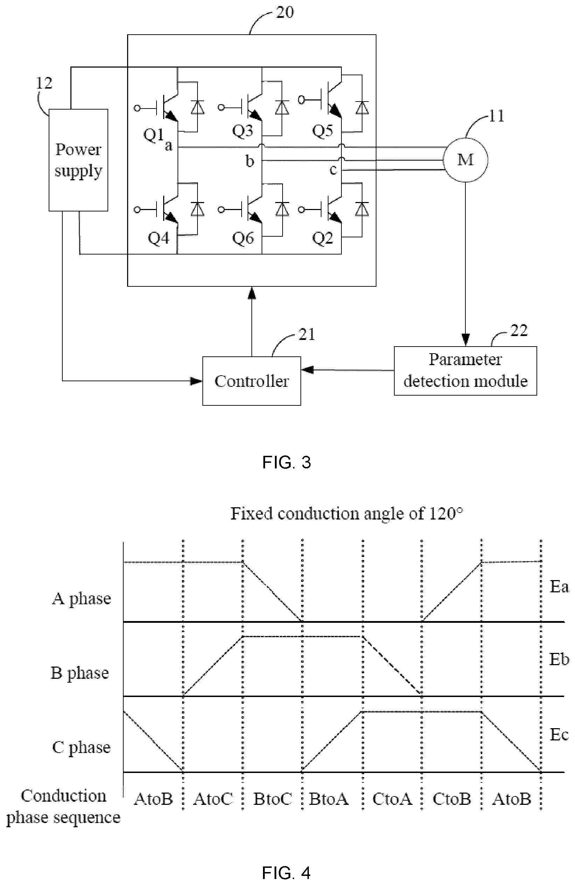

Referring to the circuit block diagram of a power tool shown in FIG. 3, a driving system of the electric motor 11 may include at least a driver circuit 20, the power supply 12, a controller 21, a rotational speed detection module 22, and a current detection module 23.

In an example, the electric motor 11 is a brushless direct current electric motor (BLDC). In an example, the electric motor 11 is a sensorless BLDC. In an example, the electric motor 11 is a sensored BLDC. In the present application, the BLDC may be an inrunner or an outrunner, and the electric motor 11 includes at least three-phase stator windings A, B, and C in a star connection or a triangular connection.

In an example, the power supply 12 may optionally be an alternating current (AC) power supply, that is, AC mains power of 120 V or 220 V may be accessed through a power interface. In an example, the power supply 12 may optionally be a battery pack. The battery pack may be formed by a group of battery cells. For example, the battery cells may be connected in series into a single power supply branch to form a 1P battery pack. The output voltage of the battery pack is changed by a power supply control module such as a direct current-direct current (DC-DC) module so that a power supply voltage suitable for the driver circuit 20, the electric motor 11, and the like is outputted to supply power to them. It is to be understood by those skilled in the art that the DC-DC module is a mature circuit structure and may be selected accordingly according to the parameter requirements of the power tool.

The driver circuit 20 is electrically connected to the stator windings A, B, and C of the electric motor 11 and configured to transmit the current from the power supply 12 to the stator windings A, B, and C to drive the electric motor 10 to rotate. In an example, the driver circuit 20 includes multiple switching elements Q1, Q2, Q3, Q4, Q5, and Q6. A gate terminal of each switching element is electrically connected to the controller 21 and used for receiving a control signal from the controller 21. The drain or source of each switching element is connected to the stator windings A, B, and C of the electric motor 11. The switching elements Q1 to Q6 receive control signals from the controller 21 to change respective conduction states, thereby changing the current loaded to the stator windings A, B, and C of the electric motor 11 by the power supply 12. In an example, the driver circuit 20 may be a three-phase bridge driver circuit including six controllable semiconductor power devices (such as a Field Effect Transistor (FET), a Bipolar Junction Transistors (BJT), or an Insulated Gate Bipolar Transistors (IGBT)). It is to be understood that the preceding switching elements may be any other types of solid-state switches, such as the IGBTs or the BJTs.

To drive the electric motor 11 shown in FIG. 3 to rotate, the driver circuit 20 generally has at least six driving states, and each switching of the driving state corresponds to one commutation action of the electric motor. As shown in FIG. 4, a horizontal axis represents the commutation points of a stator within a cycle of 360°, and a vertical axis represents the back electromotive forces of the three-phase windings. In FIG. 4, a rotor rotates by 60° each time, and the electric motor commutes once. An interval from a commutation of the electric motor to the next commutation of the electric motor is defined as a commutation interval. As can be seen from FIG. 4, within a commutation cycle of 360°, six commutations exist, and the three-phase windings of the electric motor are all turned on for 120°, that is, the conduction angle is 120°. The commutation manner of the stator windings shown in FIG. 4 is generally referred to as a manner in which two phases of windings commutate and are turned on, that is, a pairwise conduction manner. In the pairwise conduction manner, the field weakening capability of the stator windings of the electric motor is not high, and the effect of increasing the rotational speed of the electric motor is not obvious.

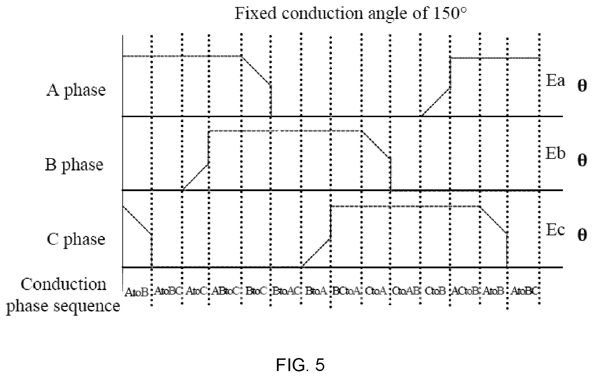

Generally, to improve the field weakening capability and increase the rotational speed of the electric motor, the conduction angle is increased. For example, the conduction angle is increased such that the conduction angle is greater than 120°. To increase the conduction angle, the equivalent voltage applied to the stator windings is generally increased. For a three-phase electric motor, increasing the conduction phases of the stator windings means changing from two-phase winding commutation and conduction to three-phase winding commutation and conduction, that is, switching from conduction in twos to conduction in threes. For example, a commutation is performed every time when the rotor rotates by 30°, that is, twelve commutation actions are performed within a commutation cycle of 360° so that it can be ensured that the three-phase windings are all turned on during the commutation process of the three-phase windings of the electric motor, and the conduction angle is greater than 120°. For example, the conduction angle is 150°. As shown in FIG. 5, when the electric motor commutates every 30°, the stator windings switch from conduction in twos to conduction in threes, and at the next commutation, the stator windings switch from conduction in threes to conduction in twos. As can be seen from the comparison between FIGS. 5 and 4, the stator windings commutate in advance by 30°. Therefore, compared with the original conduction angle, the conduction angle of the stator windings increases by 30°, that is, the conduction angle is 150°.

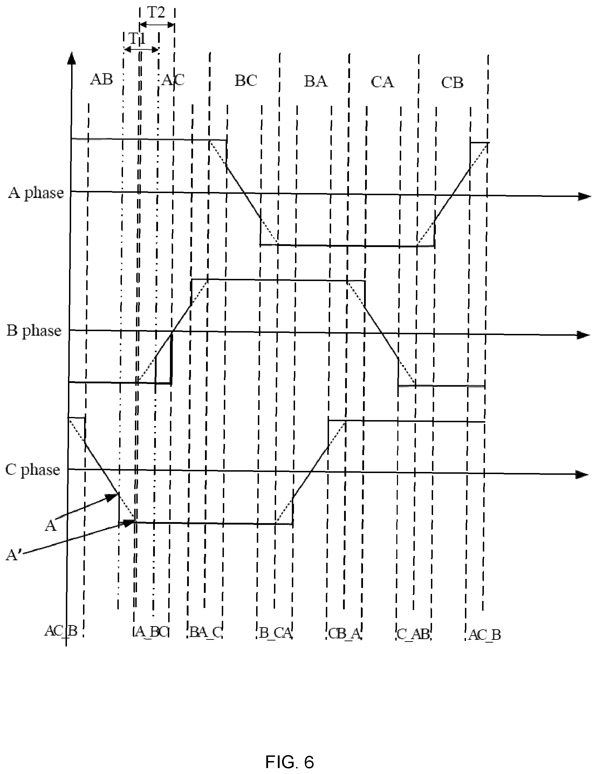

Referring to the commutation timing diagram of another commutation manner with a conduction angle of 150° shown in FIG. 6, any phase winding of the electric motor commutates in advance by 15° at the rising edge of the commutation and lags the commutation by 15° at the falling edge. Therefore, a spread angle during the conduction process of one phase winding is 30° so that the conduction angle of any phase winding is 150°. In FIG. 5, the ideal commutation point is A, and the electrical cycle of A_BC conduction is T1. However, if the actual commutation point lags and is A' due to the preceding reasons and the controller still controls the commutation according to the conduction angle of 150°, then the electrical cycle of A_BC conduction is T2, causing the floating phase B to be partially submerged, leading to disorder or failure of the control system.

To avoid the preceding problem, the controller needs to adjust the conduction angle promptly and accurately according to the actual commutation point to prevent the floating phase from being partially or completely submerged due to the commutation lag.

In an example, as shown in FIG. 3, the power tool 100 includes a parameter detection module 22 that can detect the working parameter of the operating electric motor, for example, the phase voltage of the floating phase during the commutation process of the stator windings of the electric motor or the phase voltage or phase current when the stator windings are turned on. The floating phase is a phase that is not turned on. For example, if during conduction in twos, the AB phases are turned on and the C phase is not turned on, then the C phase is the floating phase. It is to be understood that the phase voltage of the conduction phase is constant, while the phase voltage of the floating phase changes between the lowest voltage and the highest voltage during conduction at a certain rate of change. In an example, the controller 21 can correct the electrical conduction angle of the stator windings of the operating electric motor according to the acquired working parameter of the electric motor, thereby matching the commutation process of the electric motor with the electrical conduction angle to avoid the following: the conduction angle does not change due to the commutation lag, leading to commutation disorder and system failure.

The controller 21 can calculate and obtain the actual commutation point of the electric motor according to the detected working parameter of the electric motor so that the electrical conduction angle of the stator windings can be adjusted according to the actual commutation point. In an optional example, the controller 21 may determine the actual commutation point according to the phase voltage of the floating phase or the phase voltage when the stator windings are turned on. For example, the controller may determine the actual commutation point according to at least one parameter of the phase voltage of the floating phase, the phase voltage when the stator windings are turned on, or the phase current when the stator windings are turned on. Optionally, the controller may determine the actual commutation point according to the phase voltage of the floating phase or the phase voltage when the stator windings are turned on. Optionally, the controller may determine the actual commutation point according to the phase current when the stator windings are turned on.

It is to be noted that the actual commutation point of the stator windings determines the conduction angle of the windings, so the controller can adjust the conduction angle according to the actually determined commutation point to avoid the following: the floating phase is submerged due to the commutation lag, leading to system disorder.

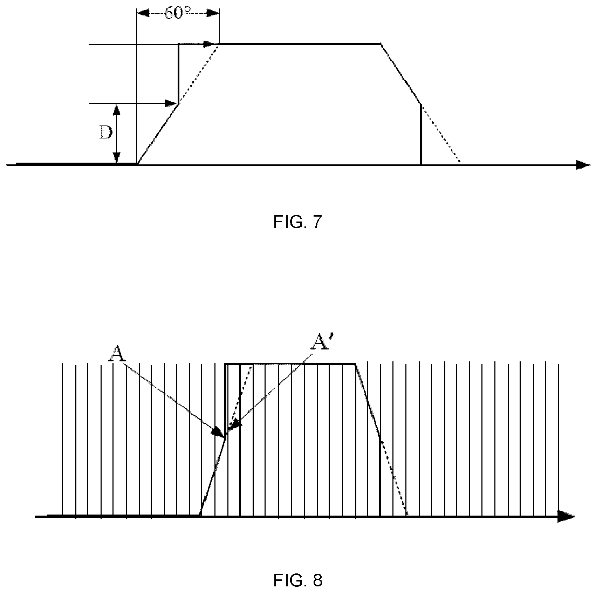

The controller 21 may determine an intermediate parameter according to the phase voltage of the floating phase and the phase voltage when the stator windings are turned on, compare the intermediate parameter with a preset parameter range, and according to a comparison result, determine whether to adjust the electrical conduction angle of the windings and how to adjust the conduction angle. It is to be understood that when the intermediate parameter is within the preset parameter range, the lag is not caused, and the conduction angle does not need to be adjusted. However, when the intermediate parameter is not within the preset parameter range, the electrical angle when the stator windings are turned on can be reduced. For example, as shown in FIG. 7, the preset parameter range may be the interval range D in FIG. 7. When the intermediate parameter is within the range D, the conduction angle does not need to be adjusted. When the intermediate parameter is outside the range D, the conduction angle needs to be adjusted according to the actual intermediate parameter.

In this example, since the stator windings switch between conduction in twos and conduction in threes, the conduction angle is greater than 120° and less than 180°. When the intermediate parameter is not within the preset parameter range, the conduction angle is greater than 120° and less than 150°.

In the example of the present application, the actual commutation point of the electric motor windings can be accurately acquired by detecting the floating phase voltage and the conduction phase voltage, and according to the conduction angle of the windings, the problem of the inaccurate commutation point detection due to the inaccurate program detection, insufficient detection accuracy, too fast a rotational speed of the electric motor, too long a freewheeling time, or the like can be avoided, thereby ensuring that the entire control system has stable control performance.

Within the time of 360° shown in FIG. 5, the conduction sequence of the windings is: A_BcA_BC→A_C→AB_C→B_C→B_AC→B_A→BC_A→C_A→C_AB→C_B→AC_B→A_B. In A_B, the A phase is connected to the positive electrode of the power supply, and the B phase is connected to the negative electrode of the power supply; in A_BC, the A phase is connected to the positive electrode of the power supply, and the B phase and the C phase are connected to the negative electrode of the power supply. In the preceding commutation manner, when the electric motor commutates every 30°, the stator windings switch from a first conduction manner to a second conduction manner, that is, from conduction in twos to conduction in threes, and at the next commutation, the stator windings switch from conduction in threes to conduction in twos. For example, A_B refers to a pairwise conduction manner, and A_BC refers to a triplet conduction manner. Generally, the cutting smoothness when a power tool such as a circular saw operates in the light load or moderate load stage is an important criterion for evaluating the operating feel of the tool. For example, in the light load or moderate load stage, the higher the rotational speed of the electric motor, the better the operating feel of the tool. To ensure that the tool has a better operating feel in the moderate load or light load stage, the conduction and commutation of the stator windings of the electric motor are controlled by using the manners shown in FIG. 5, that is, the pairwise conduction manner and the triplet conduction manner are used. The conduction angle of the stator windings is increased so that the rotational speed of the electric motor is increased, thereby ensuring the operating feel of the tool.

It is to be understood that to make the tool have a better operating feel with different loads, corresponding to different loads of the electric motor, the rotational speeds of the electric motor are different, and the conduction angles of the stator windings are different. This requires a reasonable setting of the timing for switching from the first conduction manner to the second conduction manner such that the conduction angle of the stator windings can be adaptively changed when the load changes.

In this example, the controller 21 may acquire the parameter of the electric motor detected by the parameter detection module 22 and when the preceding parameter is within the preset parameter range, control the stator windings to switch from the first conduction manner to the second conduction manner. That is to say, when the electric motor windings operate in the pairwise conduction manner, if the controller 21 detects that the working parameter of the electric motor is within the preset parameter range, the controller 21 switches the conduction manner of the windings to the triplet conduction manner.

The working parameter of the electric motor may include the phase voltage of the floating phase during the commutation process of the stator windings and the phase voltage of the conduction phase of the stator windings. In an example, the controller may calculate the ratio of the phase voltage of the floating phase during the commutation process of the stator windings to the phase voltage when the stator windings are turned on and when the ratio is within the preset parameter range, control the windings to switch from conduction in twos to conduction in threes. Assuming that the phase voltage of the floating phase is V1 and the phase voltage of the conduction phase is V2, then when the value of V1/V2 is within the preset parameter range, the windings are controlled to switch the conduction manner to conduction in threes. In an example, the preset parameter range may be a numerical interval, for example, a numerical interval less than 1, such as the numerical interval [0.1, 08], (0.1, 0.8), [0.2, 0.8], (0.2, 0.8), [0.3, 0.8], (0.3, 0.8), [0.3, 0.7], (0.3, 0.7), [0.2, 0.7], (0.2, 0.7), [0.3, 0.6], (0.3, 0.6), [0.3, 0.5], (0.3, 0.5), [0.3, 0.4], (0.3, 0.4), [0.4, 0.7], (0.4, 0.7), [0.5, 0.7], or (0.5, 0.7).

In an example, the controller 21 may detect the load of the electric motor and set the preset parameter range according to the load. Generally, when the load of the electric motor is large, the preset parameter range is relatively small, that is, the preset parameter range is narrowed; and when the load is small, the preset parameter range is widened. For example, when the load of the electric motor is small and the value of V1N2 is within (0.3, 0.7), the controller 21 controls the windings to switch the conduction manner to conduction in threes; and when the load of the electric motor is relatively large and the value of V1/V2 is within (0.6, 0.7), the controller 21 controls the windings to switch the conduction manner to conduction in threes.

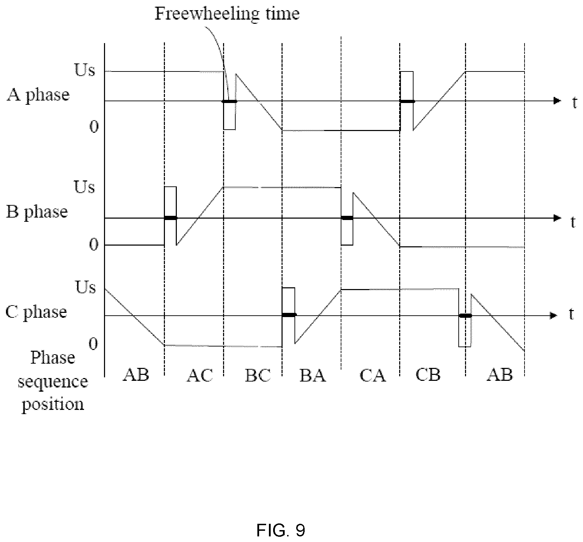

In an example, the controller 21 may determine the magnitude of the load of the electric motor according to the working parameter of the electric motor. As shown in FIG. 9, when the electric motor 20 commutates each time, the phase voltage of the floating phase changes suddenly, and the voltage value after the sudden change is maintained for a period of time before the voltage value is eliminated. This period of time may be understood as the freewheeling time of the floating-phase winding when the electric motor commutates. It is to be understood that the higher the voltage of the electric motor windings, the longer the freewheeling time. That is to say, the magnitude of the load of the electric motor can be known from the freewheeling time during the commutation process of the electric motor. In an example, the controller 21 may accurately calculate and obtain the load of the electric motor according to the demagnetization time and the bus voltage of the electric motor.

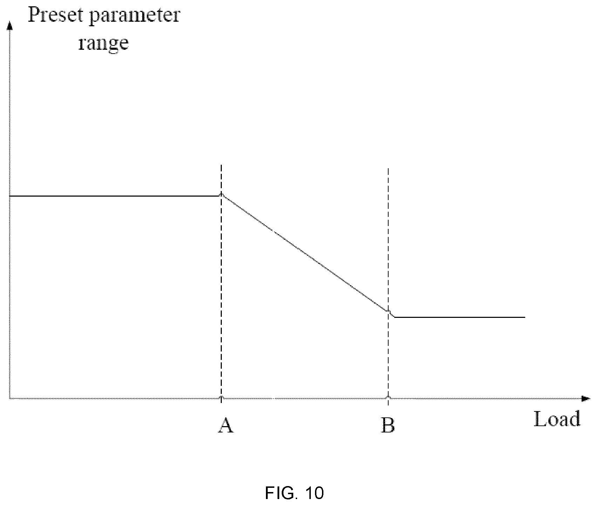

In an example, as shown in FIG. 10, when the load of the electric motor is less than A, the corresponding preset parameter range is relatively large; when the load of the electric motor is greater than B, the corresponding preset parameter range is relatively small; and when the load of the electric motor is between A and B, the corresponding preset parameter range is a variation range. For example, when the load is between A and B, one load value corresponds to one preset parameter range; or the load values between A and B are divided into stages, and the loads in each stage correspond to one preset parameter range. In this example, the unit of A or B or the parameter that represents the magnitude of the load is not limited here. In different power tools, the magnitudes of A and B may be the same or different.

In this example, an appropriate parameter range is set as a basis for switching the conduction manners of the electric motor windings so that the magnitude of the conduction angle of the windings can be smoothly changed, a relatively large rotational speed can be obtained when the load is relatively small, the conduction angle of the tool can be reduced in time when the load is relatively large, the locked rotor current can be reduced, and the impact of load changes on the operating feel of the user can be reduced.

To increase the rotational speed of the electric motor in the full speed segment of a non-inductive motor, the lead angle and spread angle are generally introduced in the electric motor control to increase the conduction angle of the windings and improve the field weakening of the windings, thereby increasing the rotational speed of the electric motor. That is to say, the three-phase stator windings of the electric motor no longer adopt the simple conduction and commutation in twos, but also adopt the process of conduction and commutation in threes, so as to increase the conduction angle of the electric motor windings.

When the stator windings of the electric motor are turned on in twos, the floating phase during commutation occupies an electrical angle of 60° in one electrical cycle. Even if the commutation point detection is inaccurate, the next commutation lag does not occur.

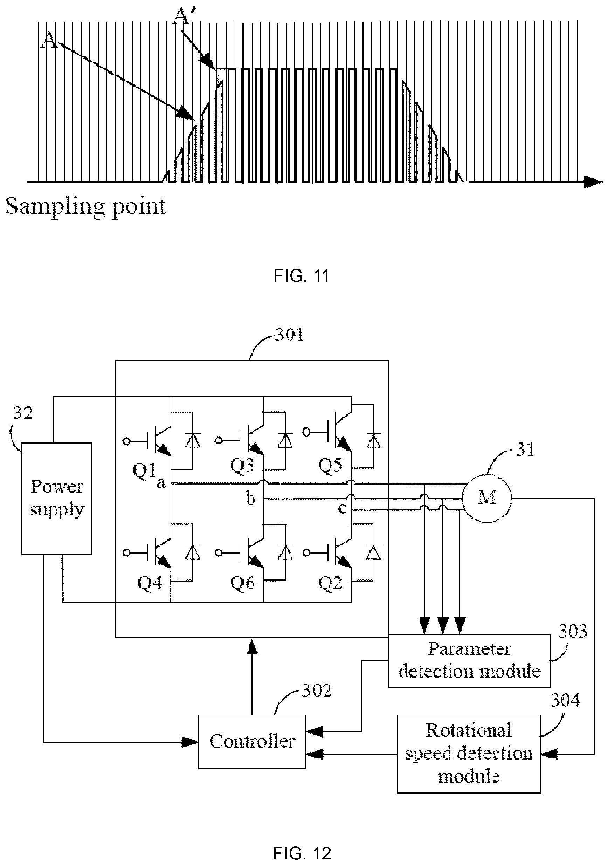

However, when the winding conduction angle is expanded to more than 120°, especially when the winding conduction angle is greater than 150°, the electrical cycle occupied by the floating phase is only 30°. If the commutation point detection is inaccurate, the next commutation lag occurs, the floating phase may be submerged during the next commutation, and the system failure occurs in severe cases. Common factors that cause inaccurate commutation point detection are shown in FIG. 11. Due to the existence of PWM, the smaller the PWM duty cycle, the smaller the probability of the ideal commutation point being detected, causing the actual commutation point A' to lag much behind the ideal commutation point A.

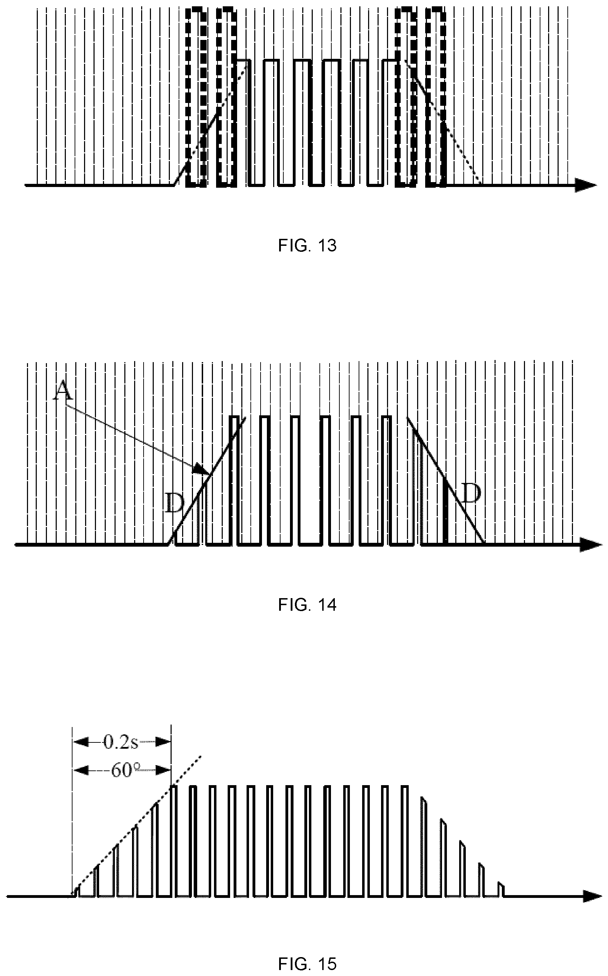

The conduction angle of 150° is used as an example. A controller 302 in FIG. 12 can control the driver circuit to change the driving state to ensure that the conduction angle of the stator windings of the electric motor is 150°. However, when the tool operates with a heavy load, the operation of the electric motor is generally controlled by using the PWM frequency, and this manner makes it more difficult to detect the commutation moment of the stator windings. As shown in FIG. 13, during the PWM control cycle, the voltage of the floating phase in the dotted box is 0, the controller cannot identify the position information of the rotor of the electric motor, and the controller may use the point where the floating phase voltage appears as the commutation moment point for commutation, bringing a relatively large error and resulting in commutation lag.

To solve the preceding problem, when the stator windings are turned on according to the preset conduction angle, the controller 302 may estimate in advance the ideal commutation moment of the floating phase of the stator windings corresponding to the corresponding conduction angle; and then at the ideal commutation moment, regardless of whether the voltage of the floating phase appears, the driver circuit can be controlled to change the conduction manner, and the stator windings of the electric motor can be controlled to perform the commutation action. The preset conduction angle may be a preset conduction angle of any magnitude, such as any conduction angle of greater than 120° and less than 150° or any conduction angle of greater than 120° and less than 180°.

In an example, as shown in FIG. 12, a parameter detection module 303 can detect the working parameter of the floating phase during the commutation process of the stator windings of the electric motor, and the controller 302 can estimate the ideal commutation moment according to the acquired working parameter and then control the stator windings to commutate at the ideal commutation moment. The working parameter of the floating phase may be understood as a parameter that changes over time. For example, the working parameter of the floating phase during the commutation process of the stator windings of the electric motor may include the phase voltage or phase current of the floating phase.

In an example, the controller 302 may estimate the rate of change of the phase voltage of the floating phase according to the phase voltages of the floating phase at at least two moments during the commutation process of the stator windings. As shown in FIG. 14, the controller 302 estimates the rate of change of the floating phase voltage according to the floating phase voltages at two moments, and the solid line D expresses the rate of change of the floating phase voltage. On this rate of change line, the ideal commutation moment corresponding to the conduction and commutation of the stator windings according to the preset conduction angle is A. Even if the phase voltage of the floating phase at moment A is 0, the controller 302 can accurately control the commutation of the electric motor. In an optional example, the controller 302 may estimate the rate of change of the current based on the phase current of the floating phase at at least one point and estimate the ideal commutation time A according to the rate of change of the current. It is to be understood that there may be a certain error in the estimated ideal commutation moment, but the error is within an acceptable range. That is to say, the error in the ideal commutation moment leads to a slight deviation in the conduction angle, and the deviation may be controlled within a range of ±5°. It is to be noted that the example of the present application is mainly to solve the problem of inaccurate commutation moment detection when the electric motor adopts conduction and commutation in threes. Therefore, in this example, the conduction angle is greater than 120° and less than 180°. Preferably, the conduction angle is greater than 120° and less than 150°. The conduction angle of 140° is used as an example. During the operation of the electric motor, the controller controls the commutation of the electric motor by estimating the ideal commutation moment and can maintain the conduction angle within a range of 135° to 140°, such as 135°, 136°, 137°, 138°, 139°, or 140°.

In an example, as shown in FIG. 13, a rotational speed detection unit 304 is further included. The rotational speed detection unit 33 can detect the rotational speed of the electric motor. The controller 302 may estimate the ideal commutation moment according to the acquired rotational speed of the electric motor and the phase voltage of the floating phase of the stator windings at any moment.

Since the voltage change of the floating phase during the commutation process of the electric motor has certain regular characteristics, in the example of the present application, the detected parameters related to the floating phase are used to parameterize the preceding characteristics, and according to the parameterized change characteristics of the floating phase voltage, the ideal commutation moment of the stator windings of the electric motor is calculated so that the floating phase being submerged due to commutation lag can be avoided; and under the premise of ensuring that the control system can operate according to the preset conduction angle, the system stability can be ensured.

In an example, the power tool 100 is mainly an impact tool, such as an impact wrench. The impact wrench often needs to perform the impact action at a relatively low speed. For example, the impact wrench impacts very soft wood boards, and a relatively small drill bit is aligned. However, since it is very difficult for the impact wrench to have the relatively low speed and maintain the constant low-speed output, operations such as the impact on the wood board and the alignment of the drill bit are difficult to perform smoothly. Generally, to achieve the impact action at a low speed, the controller 21 in FIG. 3 adjusts the duty cycle of the PWM control signal according to the commutation time of the electric motor windings, thereby controlling the rotational speed of the electric motor. For example, the controller 21 may monitor the commutation time of the electric motor 11, when the commutation time is greater than a set time threshold, increase the duty cycle of the PWM control signal to increase the rotational speed of the electric motor, and when the commutation occurs again, immediately reduce the PWM duty cycle so that the electric motor can keep rotating at a constant low speed. However, there is a problem with the control, that is, the duty cycle increases only when the preset value of the commutation time is exceeded, and the rotational speed cannot be controlled to change in real time. In addition, due to the influence of inertia, if the duty cycle increases too fast, the rotational speed may increase too fast; and if the duty cycle increases too slowly, the actual rotational speed may be less than the target speed. To sum up, the control accuracy of the rotational speed is insufficient.

To solve the preceding problem, before the electric motor commutates again, the controller 21 may adjust the PWM duty cycle according to changes in some parameters so that the electric motor can keep operating at a constant target rotational speed.

As shown in FIG. 15, during the operation of the electric motor, the time for one commutation is 0.2s, and the floating phase occupies an electrical angle of 60° during the commutation process. PWM always exists during the entire control cycle. During the commutation process of the electric motor, the change of the phase voltage of the floating phase is approximately in a straight line, and the entire change process lasts for one commutation time. That is to say, within one commutation time, if the rotational speed of the electric motor is constant, the phase voltage of the floating phase continues changing stably. If the voltage sampling cycle is fixed, the voltage change or voltage value during each sampling can be estimated. If the voltage change or voltage value is significantly different from a set value, it can be determined that the rotational speed of the electric motor has changed. In an example, if the electric motor operates at a constant speed, the time for the electric motor windings to perform one commutation is fixed and related to the rotational speed of the electric motor. If the electric motor still keeps operating at a constant speed during the commutation time, the rate of change of the floating phase of the stator windings, the duty cycle of the PWM control signal, the sampling cycle of the working parameter of the electric motor, and the like are basically unchanged. At the same time, the relationship between the preceding parameters is also basically unchanged.

In the example of the present application, the duty cycle of the PWM signal may be adjusted according to the preceding parameters so that the electric motor can keep operating at a constant low speed.

In an example, as shown in FIG. 3, the parameter detection module 22 can detect the working parameter of the operating electric motor 11. Moreover, according to the relationship between the acquired working parameter and the preset parameter, the duty cycle of the PWM control signal can be adjusted in real time before the commutation of the electric motor so that the electric motor can keep moving with a load at a relatively low rotational speed. The movement with a load may be the impact work or striking action at a low speed.

In an example, the parameter detection module 22 can detect in real time the phase voltage of the floating phase during the commutation process of the stator windings, the phase current of the floating phase during the commutation process of the stator windings, or the phase voltage or phase current when the stator windings are turned on during the operation of the electric motor 11. The controller 21 may compare at least one of the preceding parameter with the preset parameter threshold and then determine whether to adjust the PWM duty cycle according to a comparison result, so as to control the change of the rotational speed of the electric motor in advance, thereby avoiding the following: the duty cycle is changed only during the commutation of the electric motor, resulting in relatively low control accuracy.

In an example, the controller 21 is configured to determine an intermediate parameter according to the phase voltage of the floating phase during the commutation process of the stator windings of the electric motor and the phase voltage when the stator windings are turned on; and adjust the duty cycle of the PWM control signal according to the relationship between the intermediate parameter and the preset parameter threshold to keep the electric motor operating at the constant target rotational speed. For example, the controller 21 may calculate the ratio of the phase voltage of the floating phase during the commutation process of the stator windings to the phase voltage when the stator windings are turned on; when the ratio is less than or equal to the preset parameter threshold, increase the duty cycle of the PWM control signal to increase the rotational speed of the electric motor 11; and when the ratio is greater than the preset parameter threshold, reduce the duty cycle of the PWM control signal to reduce the rotational speed of the electric motor 11. Whether it is increasing or reducing the duty cycle of the PWM control signal, it is an adjustment towards the goal of keeping the electric motor operating at a constant low speed.

In this example, there is no need to pay attention to whether the stator windings commutate, and the PWM duty cycle is adjusted in real time according to the relationship between the phase voltage of the floating phase and the phase voltage of the conduction phase so that the adjustment timeliness of the rotational speed of the electric motor is ensured.

In an example, the preceding preset parameter threshold may be set according to the sampling cycle of the working parameter of the electric motor and the commutation time of the stator windings. For example, the controller 21 may determine the ratio of the sampling cycle of the working parameter of the electric motor to the commutation time of the stator windings as the preset parameter threshold. Optionally, the controller 21 may set the preset parameter threshold according to the electrical angle or sampling cycle corresponding to the time for one commutation of the electric motor. Correspondingly, if the preset parameter threshold changes, the working parameter of the operating electric motor compared with the preset parameter threshold is adjusted accordingly.

In an example, the controller 21 may compare in real time a first ratio of the phase voltage of the floating phase during the commutation process of the stator windings to the phase voltage when the stator windings are turned on with a second ratio of the sampling cycle of the working parameter of the electric motor to the commutation time of the stator windings; when the first ratio is less than or equal to the second ratio, increase the duty cycle of the PWM control signal to increase the rotational speed of the electric motor 11; and when the first ratio is greater than the second ratio, reduce the duty cycle of the PWM control signal to reduce the rotational speed of the electric motor 11.

In an example, the controller 21 can control the electric motor to keep operating at a constant low speed of 100 RPM to 300 RPM.

In the example of the present application, by analyzing and processing the floating phase voltage and the conduction phase voltage during the commutation process of the electric motor, the PWM duty cycle can be adjusted in advance before the commutation of the electric motor so that the rotational speed of the electric motor is kept constant, thereby ensuring the adjustment real-time and accuracy of the rotational speed of the electric motor under low-speed control.

In the example of the present application, the controller 21 in FIG. 3 may control the conduction states of the switching elements in the driver circuit 20 by modulating the duty cycle of the PWM signal so that the conduction phase of the stator windings can be controlled, and the electrical conduction angle of any magnitude can be obtained. The conduction angles are different, and the working currents, rotational speeds, voltages, or torques of the electric motor are also different.

In an example, the controller 21 may acquire in real time the working parameter outputted by the parameter detection module 22 or acquire the working parameter at a certain frequency. Moreover, when it is detected that the working parameter is greater than a first parameter threshold, the driver circuit 20 is controlled to change the conduction state and change the electrical conduction angle of the stator windings of the operating electric motor. In this example, the adjusted electrical conduction angle of the stator windings is less than 120°. By reducing the electrical conduction angle, the working current of the electric motor can be quickly reduced, thereby avoiding the reduction in the heavy-load performance of the tool caused by frequent triggering of the overcurrent protection mechanism. It is to be understood that the first parameter threshold may be the lowest current value of the power tool 100 that triggers the overcurrent protection mechanism. For example, if the overcurrent protection mechanism is triggered when the working current of the electric motor is 70 A, the first parameter threshold is 70 A.

In an example, when the preceding working parameter is greater than the first parameter threshold, the controller 21 may control the average electrical conduction angle of the stator windings within a period of time to be less than 120°. The period of time may be at least one electrical cycles. For example, the controller 21 may modulate the duty cycle of the PWM signal and change the conduction states of the switching elements in the driver circuit, so as to change the time when the phase windings of the electric motor are on at the first electrical conduction angle within the period of time and the time when the phase windings of the electric motor are on at the second electrical conduction angle within the period of time, thereby obtaining an average electrical conduction angle of less than 120°. The first electrical conduction angle is greater than 120°, and the second electrical conduction angle is less than 120°. For example, the first electrical conduction angle is 150°, and the second electrical conduction angle is 110°. That is to say, to obtain the first electrical conduction angle, the stator windings switch between the pairwise conduction manner and the triplet conduction manner; and to obtain the second electrical conduction angle, the stator windings do not have the triplet conduction manner. For example, if within 100ms, the time when the phase windings of the electric motor are on at the first electrical conduction angle is 20ms, and the time when the phase windings of the electric motor are on at the second electrical conduction angle is 80ms, then the average electrical conduction angle during the period of time is less than 120°. It is to be understood that the conduction time of the first electrical conduction angle may be a continuous time period within a period of time or may be the sum of all non-continuous time periods within a period of time. Optionally, within the period of time, the ratio of the conduction time of the first electrical conduction angle to the conduction time of the second electrical conduction angle is greater than or equal to 0 and less than 1.

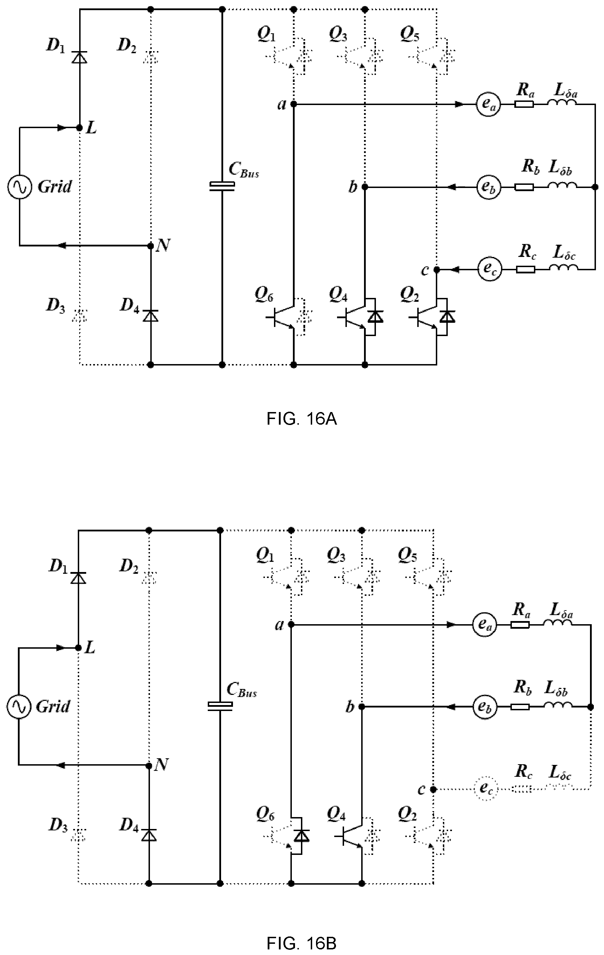

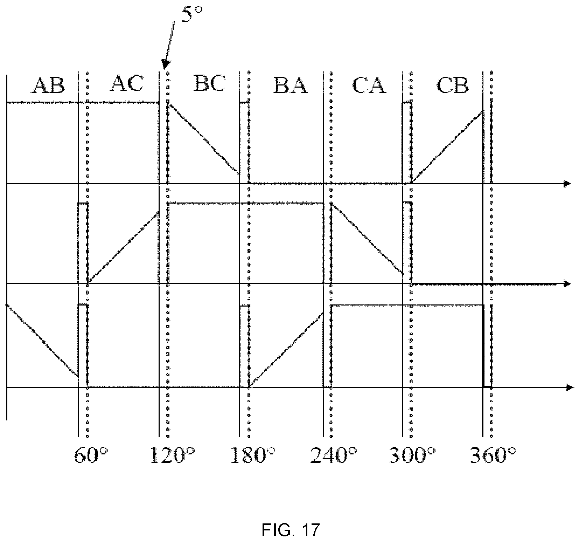

When the preceding time ratio is 0, the stator windings do not have the triplet conduction manner within one electrical cycle. To obtain an electrical conduction angle of less than 120°, the controller 21 may control the driver circuit 20 to change the conduction state so that the stator windings switch between the normal drive mode of the pairwise conduction and the freewheeling mode, thereby obtaining an electrical conduction angle of less than 120°. When the driver circuit is in the freewheeling mode, the driver circuit may be in a freewheeling mode in which three low-side switching elements are turned on as shown in FIG. 16A, or the driver circuit may be in a freewheeling mode in which one switching element is turned on as shown in FIG. 16B. For example, within one electrical cycle, when the drive circuit is turned on in the pairwise conduction driving and the freewheeling mode shown in FIG. 16A, the electrical conduction angle waveforms of the three-phase windings of the electric motor are shown in FIG. 17. In FIG. 16, in every 60° commutation cycle, the three-phase windings have a total low-level time of 5° so that within one electrical cycle, the electrical conduction angle of each phase winding is 110°.

The controller 21 may detect the working parameter of the electric motor in real time during the working process of the power tool 100, and when the working parameter is less than or equal to the first parameter threshold, control the stator windings to be turned on and operating at the first electrical conduction angle. The above working parameter refers to the working current of the electric motor. That is to say, before the working current of the electric motor is greater than the first parameter threshold, the controller 21 controls the electric motor windings to operate at a fixed electrical conduction angle; and when the working parameter of the electric motor is greater than the first parameter threshold, to avoid triggering the overcurrent protection mechanism, the controller 21 reduces the working current of the electric motor by using the preceding manner of reducing the electrical conduction angle to below 120°. For example, after the working current of the electric motor is reduced, the controller 21 may continue monitoring the working current of the electric motor, and when the working current is reduced to less than or equal to a second parameter threshold, control the electric motor windings to be turned on and operating at the first electrical conduction angle.

In an example, during the initial working stage of the electric motor startup, the controller 21 may control the electric motor windings to be turned on and operating at a third electrical conduction angle for a preset period of time and then control the electric motor windings to be turned on and operating at the first electrical conduction angle. When the electric motor windings are turned on and operating at the first electrical conduction angle, the controller 21 may detect the working current of the electric motor. Moreover, when the working current is less than or equal to the first parameter threshold, the duty cycle of the PWM signal is modulated to achieve constant-speed control at the first electrical conduction angle; and when the working current is greater than the first parameter threshold, the electric motor windings are controlled to be turned on and operating at a conduction angle of less than 120° until the working current of the electric motor is less than or equal to the second parameter threshold, and then the electric motor windings are controlled to switch to the conduction and operation at the first electrical conduction angle. The third electrical conduction angle is greater than the second electrical conduction angle and less than the first electrical conduction angle. Optionally, the third electrical conduction angle is 120°.

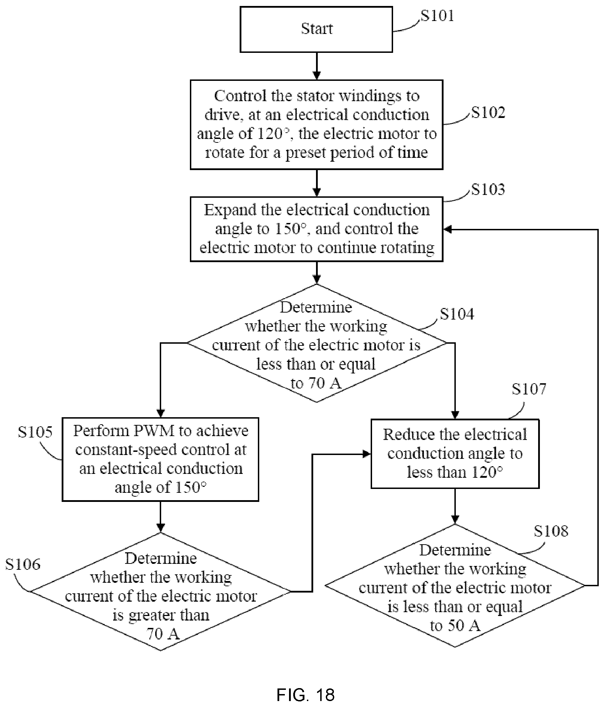

Referring to FIG. 18, a process of controlling a power tool includes the steps described below.

In S101, startup is performed.

In S102, the stator windings are controlled to drive, at an electrical conduction angle of 120°, the electric motor to rotate for a preset period of time.

The preset period of time may be the time for the rotor of the electric motor to rotate for two turns or the time for two electrical cycles.

In S103, the electrical conduction angle is expanded to 150°, and the electric motor is controlled to continue rotating.

In S104, whether the working current of the electric motor is less than or equal to 70 A is determined; if so, step S105 is performed, otherwise step S107 is performed.

The first parameter threshold is set to 70 A.

In S105, PWM is performed to achieve constant-speed control at an electrical conduction angle of 150°.

In S106, whether the working current of the electric motor is greater than 70 A is determined. If so, step S107 is performed, otherwise step S105 is performed.

In S107, the electrical conduction angle is reduced to less than 120°.

In S108, whether the working current of the electric motor is less than or equal to 50 A is determined. If so, step S103 is performed.

The second parameter threshold is set to 50 A.

This application avoids the problem of system failure caused by submerged the floating phase caused by commutation lag caused by inaccurate commutation detection. It ensures the stability of the control system on the basis of ensuring that the electric motor has larger speed and torque.

## Claims

1. A power tool (100), comprising:
an electric motor (11) comprising a rotor and three-phase stator windings;
a driver circuit (20) having multiple semiconductor switching elements;
a parameter detection module (22) configured to detect a working parameter of the operating electric motor; and
a controller (21) electrically connected to at least the driver circuit and the electric motor;
wherein the controller is configured to:
acquire the working parameter; and
correct an electrical conduction angle of the stator windings of the operating electric motor according to the working parameter;
wherein the working parameter comprises a phase voltage of a floating phase during a commutation process of the stator windings or a phase voltage or phase current when the stator windings are turned on;
**characterized in that**
the controller is configured to determine an intermediate parameter according to the phase voltage of the floating phase during the commutation process of the stator windings and the phase voltage when the stator windings are turned on; and reduce a conduction angle of the stator windings when the intermediate parameter is not within a preset parameter range.

2. The power tool of claim 1, wherein the controller is configured to determine an actual commutation point of the stator windings during an operation process of the electric motor according to the phase voltage of the floating phase or the phase voltage when the stator windings are turned on; and adjust the electrical conduction angle of the stator windings according to the actual commutation point.

3. The power tool of claim 1, wherein the controller is configured to determine an actual commutation point of the stator windings during an operation process of the electric motor according to a phase current when the stator windings are turned on; and adjust the electrical conduction angle of the stator windings according to the actual commutation point.

4. The power tool of any one of claims 1 to 3, wherein the conduction angle of the stator windings is greater than 120° and less than 180°.

5. The power tool of claim 1, wherein the controller is configured to calculate the ratio of the phase voltage of the floating phase during the commutation process of the stator windings to the phase voltage when the stator windings are turned on; and reduce a conduction angle of the stator windings when the ratio is greater than a preset ratio.

6. The power tool of claim 5, wherein the conduction angle of the stator windings is greater than 120° and less than 150°.

7. The power tool of claim 1, wherein, during a working process of the electric motor, the stator windings have a first conduction manner in which two-phase windings commutate and are turned on and a second conduction manner in which the three-phase windings commutate and are turned on, and the controller is configured to control the stator windings to switch from the first conduction manner to the second conduction manner when the working parameter is within a preset parameter range.

8. The power tool of claim 7, wherein the controller is configured to set the conduction time of the second conduction manner according to the working parameter and a rotational speed of the electric motor and when the conduction time ends, control the stator windings to switch to the first conduction manner.

9. The power tool of claim 7, wherein the working parameter comprises a phase voltage of a floating phase during a commutation process of the stator windings and a phase voltage of a conduction phase of the stator windings.

10. The power tool of claim 9, wherein the controller is configured to calculate the ratio of the phase voltage of the floating phase during the commutation process of the stator windings to the phase voltage when the stator windings are turned on; and when the ratio is within the preset parameter range, control the stator windings to switch from the first conduction manner to the second conduction manner.

11. The power tool of claim 7, wherein the working parameter further comprises the demagnetization time during the commutation process of the stator windings and the bus voltage of the electric motor; and the controller is configured to set the preset parameter range according to the demagnetization time or the bus voltage.

## Patentansprüche

1. Ein Elektrowerkzeug (100), umfassend:
einen Elektromotor (11), der einen Rotor und dreiphasige Statorwicklungen umfasst;
eine Treiberschaltung (20) mit mehreren Halbleiterschaltelementen;
ein Parametererfassungsmodul (22), das dazu ausgebildet ist, einen Betriebsparameter des betriebenen Elektromotors zu detektieren; und
einen Controller (21), der zumindest elektrisch mit der Treiberschaltung und dem Elektromotor verbunden ist;
wobei der Controller dazu ausgebildet ist:
den Betriebsparameter zu erfassen; und
einen elektrischen Leitwinkel der Statorwicklungen des betriebenen Elektromotors in Abhängigkeit von dem Betriebsparameter zu korrigieren;
wobei der Betriebsparameter eine Phasenspannung einer freischwebenden Phase während eines Kommutierungsprozesses der Statorwicklungen oder eine Phasenspannung oder einen Phasenstrom umfasst, wenn die Statorwicklungen eingeschaltet sind;
**dadurch gekennzeichnet, dass**
der Controller dazu ausgebildet ist, einen Zwischenparameter in Abhängigkeit von der Phasenspannung der freischwebenden Phase während des Kommutierungsprozesses der Statorwicklungen und der Phasenspannung zu bestimmen, wenn die Statorwicklungen eingeschaltet sind; und einen Leitwinkel der Statorwicklungen zu reduzieren, wenn der Zwischenparameter nicht innerhalb eines vorgegebenen Parameterbereichs liegt.

2. Das Elektrowerkzeug nach Anspruch 1, wobei der Controller dazu ausgebildet ist, während eines Betriebsprozesses des Elektromotors einen tatsächlichen Kommutierungspunkt der Statorwicklungen in Abhängigkeit von der Phasenspannung der freischwebenden Phase oder der Phasenspannung zu bestimmen, wenn die Statorwicklungen eingeschaltet sind; und den elektrischen Leitwinkel der Statorwicklungen in Abhängigkeit von dem tatsächlichen Kommutierungspunkt anzupassen.

3. Das Elektrowerkzeug nach Anspruch 1, wobei der Controller dazu ausgebildet ist, während eines Betriebsprozesses des Elektromotors einen tatsächlichen Kommutierungspunkt der Statorwicklungen in Abhängigkeit von einem Phasenstrom zu bestimmen, wenn die Statorwicklungen eingeschaltet sind; und den elektrischen Leitwinkel der Statorwicklungen in Abhängigkeit von dem tatsächlichen Kommutierungspunkt anzupassen.

4. Das Elektrowerkzeug nach einem der Ansprüche 1 bis 3, wobei der Leitwinkel der Statorwicklungen größer als 120° und kleiner als 180° ist.

5. Das Elektrowerkzeug nach Anspruch 1, wobei der Controller dazu ausgebildet ist, das Verhältnis der Phasenspannung der freischwebenden Phase während des Kommutierungsprozesses der Statorwicklungen zu der Phasenspannung zu berechnen, wenn die Statorwicklungen eingeschaltet sind; und einen Leitwinkel der Statorwicklungen zu reduzieren, wenn das Verhältnis größer als ein vorgegebenes Verhältnis ist.

6. Das Elektrowerkzeug nach Anspruch 5, wobei der Leitwinkel der Statorwicklungen größer als 120° und kleiner als 150° ist.

7. Das Elektrowerkzeug nach Anspruch 1, wobei während eines Arbeitsprozesses des Elektromotors die Statorwicklungen eine erste Leitweise aufweisen, in der Wicklungen zweier Phasen kommutieren und eingeschaltet werden, und eine zweite Leitweise, in der die Wicklungen der drei Phasen kommutieren und eingeschaltet werden, und wobei der Controller dazu ausgebildet ist, die Statorwicklungen so zu steuern, dass von der ersten Leitweise auf die zweite Leitweise umgeschaltet wird, wenn der Betriebsparameter innerhalb eines vorgegebenen Parameterbereichs liegt.

8. Das Elektrowerkzeug nach Anspruch 7, wobei der Controller dazu ausgebildet ist, die Leitdauer der zweiten Leitweise in Abhängigkeit von dem Betriebsparameter und einer Drehzahl des Elektromotors einzustellen und, wenn die Leitdauer endet, die Statorwicklungen so zu steuern, dass auf die erste Leitweise umgeschaltet wird.

9. Das Elektrowerkzeug nach Anspruch 7, wobei der Betriebsparameter eine Phasenspannung einer freischwebenden Phase während eines Kommutierungsprozesses der Statorwicklungen und eine Phasenspannung einer leitenden Phase der Statorwicklungen umfasst.

10. Das Elektrowerkzeug nach Anspruch 9, wobei der Controller dazu ausgebildet ist, das Verhältnis der Phasenspannung der freischwebenden Phase während des Kommutierungsprozesses der Statorwicklungen zu der Phasenspannung, wenn die Statorwicklungen eingeschaltet sind, zu berechnen; und, wenn das Verhältnis innerhalb des vorgegebenen Parameterbereichs liegt, die Statorwicklungen so zu steuern, dass von der ersten Leitweise auf die zweite Leitweise umgeschaltet wird.

11. Das Elektrowerkzeug nach Anspruch 7, wobei der Betriebsparameter ferner die Entmagnetisierungszeit während des Kommutierungsprozesses der Statorwicklungen und die Zwischenkreisspannung des Elektromotors umfasst; und wobei der Controller dazu ausgebildet ist, den vorgegebenen Parameterbereich in Abhängigkeit von der Entmagnetisierungszeit oder der Zwischenkreisspannung einzustellen.

## Revendications

1. Un outil électrique (100), comprenant:
un moteur électrique (11) comprenant un rotor et des enroulements de stator triphasés;
un circuit de commande (20) ayant une pluralité d'éléments de commutation semi-conducteurs;
un module de détection de paramètres (22) configuré pour détecter un paramètre de fonctionnement du moteur électrique en fonctionnement; et
un contrôleur (21) électriquement connecté au moins au circuit de commande et au moteur électrique;
dans lequel le contrôleur est configuré pour:
acquérir le paramètre de fonctionnement; et
corriger un angle de conduction électrique des enroulements de stator du moteur électrique en fonctionnement en fonction du paramètre de fonctionnement;
dans lequel le paramètre de fonctionnement comprend une tension de phase d'une phase flottante pendant un processus de commutation des enroulements de stator ou une tension de phase ou un courant de phase lorsque les enroulements de stator sont mis sous tension;
**caractérisé en ce que**
le contrôleur est configuré pour déterminer un paramètre intermédiaire en fonction de la tension de phase de la phase flottante pendant le processus de commutation des enroulements de stator et de la tension de phase lorsque les enroulements de stator sont mis sous tension; et réduire un angle de conduction des enroulements de stator lorsque le paramètre intermédiaire n'est pas dans une plage de paramètres prédéfinie.

2. L'outil électrique selon la revendication 1, dans lequel le contrôleur est configuré pour déterminer un point de commutation réel des enroulements de stator pendant un processus de fonctionnement du moteur électrique en fonction de la tension de phase de la phase flottante ou de la tension de phase lorsque les enroulements de stator sont mis sous tension; et ajuster l'angle de conduction électrique des enroulements de stator en fonction du point de commutation réel.

3. L'outil électrique selon la revendication 1, dans lequel le contrôleur est configuré pour déterminer un point de commutation réel des enroulements de stator pendant un processus de fonctionnement du moteur électrique en fonction d'un courant de phase lorsque les enroulements de stator sont mis sous tension; et ajuster l'angle de conduction électrique des enroulements de stator en fonction du point de commutation réel.

4. L'outil électrique selon l'une quelconque des revendications 1 à 3, dans lequel l'angle de conduction des enroulements de stator est supérieur à 120° et inférieur à 180°.

5. L'outil électrique selon la revendication 1, dans lequel le contrôleur est configuré pour calculer le rapport de la tension de phase de la phase flottante pendant le processus de commutation des enroulements de stator à la tension de phase lorsque les enroulements de stator sont mis sous tension; et réduire un angle de conduction des enroulements de stator lorsque le rapport est supérieur à un rapport prédéfini.

6. L'outil électrique selon la revendication 5, dans lequel l'angle de conduction des enroulements de stator est supérieur à 120° et inférieur à 150°.

7. L'outil électrique selon la revendication 1, dans lequel, pendant un processus de fonctionnement du moteur électrique, les enroulements de stator présentent une première manière de conduction dans laquelle les enroulements de deux phases commutent et sont mis sous tension et une deuxième manière de conduction dans laquelle les enroulements des trois phases commutent et sont mis sous tension, et le contrôleur est configuré pour commander les enroulements de stator pour passer de la première manière de conduction à la deuxième manière de conduction lorsque le paramètre de fonctionnement est dans une plage de paramètres prédéfinie.

8. L'outil électrique selon la revendication 7, dans lequel le contrôleur est configuré pour régler le temps de conduction de la deuxième manière de conduction en fonction du paramètre de fonctionnement et d'une vitesse de rotation du moteur électrique et, lorsque le temps de conduction se termine, commander les enroulements de stator pour passer à la première manière de conduction.

9. L'outil électrique selon la revendication 7, dans lequel le paramètre de fonctionnement comprend une tension de phase d'une phase flottante pendant un processus de commutation des enroulements de stator et une tension de phase d'une phase conductrice des enroulements de stator.

10. L'outil électrique selon la revendication 9, dans lequel le contrôleur est configuré pour calculer le rapport de la tension de phase de la phase flottante pendant le processus de commutation des enroulements de stator à la tension de phase lorsque les enroulements de stator sont mis sous tension; et lorsque le rapport est dans la plage de paramètres prédéfinie, commander les enroulements de stator pour passer de la première manière de conduction à la deuxième manière de conduction.

11. L'outil électrique selon la revendication 7, dans lequel le paramètre de fonctionnement comprend en outre le temps de démagnétisation pendant le processus de commutation des enroulements de stator et la tension de bus du moteur électrique; et le contrôleur est configuré pour régler la plage de paramètres prédéfinie en fonction du temps de démagnétisation ou de la tension de bus.
